# EUROPÄISCHE PATENTSCHRIFT

(11) **EP 3 682 712 B1**
(45) Veröffentlichungstag und Bekanntmachung des Hinweises auf die Patenterteilung: **22.01.2025**
(21) Anmeldenummer: 18762492.9
(22) Anmeldetag: 29.08.2018
(51) Int. Cl.: H05B 6/66, H05B 6/68

(54) **HAUSHALTSGERÄT MIT TEMPERATURDETEKTOR**
HOUSEHOLD APPLIANCE HAVING A TEMPERATURE DETECTOR
APPAREIL ÉLECTROMÉNAGER COMPRENANT UN DÉTECTEUR DE TEMPÉRATURE

(30) Priorität: 11.09.2017 DE 102017215966
(43) Veröffentlichungstag der Anmeldung: 22.07.2020
(73) Patentinhaber: BSH Hausgeräte GmbH, 81739 München (DE)
(72) Erfinder: BÖTTCHER, Christian, 83278 Traunstein (DE); KAISER, Andreas, 83128 Halfing (DE); KUCHLER, Markus, 83257 Gstadt am Chiemsee (DE); VOGT, Matthias, 74182 Obersulm (DE)
(86) Internationale Anmeldenummer: PCT/EP2018/073218
(87) Internationale Veröffentlichungsnummer: WO 2019/048305

(56) Entgegenhaltungen:
- EP-A1- 2 182 774
- WO-A1-2004/091260
- WO-A1-2015/037004
- GB-A- 2 310 733
- US-A- 4 996 403
- US-A- 5 021 620
- US-A- 5 389 335
- US-A- 5 645 748
- US-A1- 2003 121 913
- US-A1- 2010 115 785
- US-A1- 2013 278 345

## Beschreibung

Die Erfindung betrifft ein Haushaltsgerät, das mindestens ein Schaltungsbauteil, eine Steuereinrichtung zum Ansteuern des mindestens einen Schaltungsbauteils und einen Temperaturdetektor, der mit der Steuereinrichtung gekoppelt ist, aufweist. Die Erfindung betrifft auch ein Verfahren zum Betreiben eines solchen Haushaltsgeräts. Die Erfindung ist insbesondere vorteilhaft anwendbar auf Mikrowellen-Gargeräte wie eigenständige Mikrowellen-Gargeräte oder Öfen, z.B. Backöfen, mit Mikrowellenfunktionalität.

Bisher bekannte Halbleiterverstärker in Mikrowellen-Gargeräten verwenden ein Durchführungsnetzwerk, das mindestens einem Transistor nachgeschaltet ist. Der Halbleiterverstärker weist unter anderem einen Zirkulator zum Schutz des Transistors vor aus einem Garraum zurückreflektierte Mikrowellen-Leistung, eine Einheit zur Erfassung oder Messung der reflektierten Mikrowellen-Leistung sowie eine Endlast zur Abführung der reflektierten Mikrowellen-Leistung auf.

DE 298 039 05 U1 offenbart zur Temperaturmessung von Kochgeschirr ein Kochfeld mit einem Kochfeldrahmen, an dem eine Sensorbaugruppe gehaltert ist, die ein unterhalb des Kochfeldrahmens befestigtes Aufnahmeteil und ein in diesem vertikal verschiebbar geführtes rohrförmiges Sensorteil mit einem Sichtfenster aufweist, durch das bei nach oben durch eine Rahmenöffnung ausgefahrenem Sensorteil Wärmestrahlung auf einen in dem Sensorteil angeordneten Infrarotsensor fällt, wodurch eine berührungslose Messung der Wandtemperatur eines auf dem Kochfeld abgestellten wärmeabstrahlenden Gargerätes möglich ist.

DE 10 305 368 A1 offenbart einen Elektromotor, der mehrere Bauteile wie Stator, Rotor, Wicklungen und Lager aufweist, deren betriebsabhängige Temperaturen überwacht werden, wobei diese Komponenten Temperatursensoren zur Ermittlung ihrer absoluten Temperaturen aufweisen. Die Temperatursensoren sind Wärmestrahlungssensoren, die eine berührungslose Erfassung und / oder Messung der abgestrahlten Wärme ermöglichen.

WO 2015/037004 A1 betrifft die Messung der Temperatur von Objekten unter starken elektromagnetischen Feldern.

US 5 645 748 A betrifft ein Verfahren und ein System zum gleichzeitigen Sterilisieren einer Vielzahl metallischer chirurgischer Instrumente mittels Mikrowellenstrahlung und zur Verhinderung einer Lichtbogenbildung der metallischen chirurgischen Instrumente.

US 2010/115785 A1 befasst sich im Allgemeinen mit dem Trocknen eines Objekts, optional unter Verwendung von HF-Energie. In vielen Ausführungsformen der Erfindung handelt es sich bei dem Objekt um Kleidung.

EP 2 182 774 A1 t betrifft eine Mikrowellen-Heizvorrichtung zum Erhitzen eines zu erhitzenden Objekts, d. h. eines Heizziels, durch Bestrahlung mit einer Mikrowelle.

US 4 996 403 A bezieht sich allgemein auf die Technik der Mikrowellen-Heizungssteuerungssysteme und insbesondere auf die Steuerung des Siedeprozesses einer Flüssigkeit in einem Mikrowellenapplikator.

US 2003/121913 A1 bezieht sich auf ein Mikrowellen-Heizgerät und insbesondere auf ein Mikrowellen-Heizgerät mit einem Mikrowellen-Heizelement, das auf der Oberfläche einer Heizplatte montiert ist, auf die Nahrungsmittel in einer Heizkammer gelegt werden.

GB 2 310 733 A betrifft ein Wärmekontrollsystem für einen Mikrowellenherd, der zum Erhitzen verpackter, mit einem Deckel oder einer Kunststofffolie versiegelter Nahrungsmittel geeignet ist.

WO 2004/091260 A1 betrifft ein Hochfrequenz-Heizgerät.

US 2013/278345 A1 bezieht sich allgemein auf elektronische Schaltkreise und insbesondere auf Mikrowellenadapter für Festkörper-Mikrowellenoszillatoren.

US 5 021 620 A bezieht sich auf ein Hochfrequenz-Heizgerät, bei dem eine durch Gleichrichten einer von einem Wechselrichterkreis in einem Gleichrichterkreis erzeugten Hochfrequenzspannung erhaltene Gleichspannung an ein Magnetron angelegt wird und dadurch das Magnetron antreibt, und insbesondere auf ein derartiges Hochfrequenz-Heizgerät, das mit Kompensationsmitteln zum Kompensieren eines Anodenstroms des Magnetrons ausgestattet ist, um ihn auf einem vorgegebenen Wert zu halten.

US 5 389 335 A bezieht sich auf ein System und ein Verfahren zum Erhitzen auf hohe Temperaturen und für kurze Zeiträume und insbesondere auf ein System und ein Verfahren zum Erhitzen auf hohe Temperaturen und für kurze Zeiträume für wärmeempfindliches Material, das die ausgewählten biologischen Eigenschaften des wärmeempfindlichen Materials bewahrt und gleichzeitig eine mehrfache Log-Reduktion von Krankheitserregern, wie etwa Viren, in dem wärmeempfindlichen Material erreicht.

Es ist die **Aufgabe** der vorliegenden Erfindung, die Nachteile des Standes der Technik zumindest teilweise zu überwinden und insbesondere eine Möglichkeit für einen besonders sicheren und zuverlässigen Betrieb eines Mikrowellen-Haushaltsgeräts bereitzustellen, insbesondere eines Mikrowellen-Gargeräts.

Diese Aufgabe wird gemäß den Merkmalen eines Haushalts-Mikrowellengargeräts nach Anspruch 1 und den Verfahrensschritten des Anspruchs 14 gelöst. Weitere bevorzugte Ausführungsformen sind in den abhängigen Ansprüchen definiert.

Die Aufgabe wird gelöst durch ein Haushaltsgerät, aufweisend mindestens ein Schaltungsbauteil, eine Steuereinrichtung zum Ansteuern des mindestens einen Schaltungsbauteils und mindestens einen Temperaturdetektor zum Abfühlen einer Temperatur mindestens eines Schaltungsbauteils, wobei die Steuereinrichtung mit dem Temperaturdetektor gekoppelt ist und dazu eingerichtet ist, das Haushaltsgerät beruhend auf von dem Temperaturdetektor gemessenen Temperaturmessdaten anzusteuern, und wobei der mindestens eine Temperaturdetektor ein IR-Detektor ist.

Dieses Haushaltsgerät weist den Vorteil auf, dass durch die Temperaturmessung ein Schaltungsbauteil auf einen nicht normalen bzw. temperaturkritischen Betrieb überwachbar ist. Ein temperaturkritischer Betrieb kann z.B. einen Betrieb nach Überschreitung einer Bauteil-Grenztemperatur oder einen übermäßig schnellen Temperaturanstieg umfassen.

Die Nutzung speziell eines IR-Detektors ergibt den Vorteil, dass eine besonders hohe Detektionsgeschwindigkeit und Präzision der Temperaturmessung erreicht wird, da thermische Trägheit praktisch keine Rolle spielt. Dies wiederum ermöglicht eine besonders schnelle und/oder genaue Regelbarkeit des überwachten Schaltungsbauteils zur Einstellung seiner Temperatur.

Ein weiterer Vorteil der Nutzung eines IR-Detektors ist, dass dieser die Schaltungsbauteile praktisch nicht beeinflusst, da er typischerweise keine metallischen Bereiche aufweist, die in die Nähe der Schaltungsbauteile gebracht zu werden brauchen. Im Gegensatz dazu können berührende Thermoelemente wie Platin-Messwiderstände o.ä. dieses Schaltungsbauteil stören, wenn sie das Schaltungsbauteil berühren oder sich in dessen Nähe befinden. Dabei können auch noch die Anschlussleitungen berührender Thermoelemente nachteiligerweise ein Signal auskoppeln.

Auch weisen berührende Thermoelemente eine höhere thermische Trägheit als ein IR-Detektor auf, insbesondere falls das Thermoelement beabstandet zu dem abzufühlenden Schaltungsbauteil angeordnet sein muss. Insbesondere für den Fall, dass das Thermoelement beabstandet zu dem abzufühlenden Schaltungsbauteil angeordnet sein muss, um es nicht zu stören, ist mit Thermoelementen keine ausreichend genaue und verzögerungsfreie Temperaturmessung des Schaltungsbauteils und somit auch kein ausreichend schnelles Reagieren auf eine thermische Überlastung des Bauteils möglich.

Das Haushaltsgerät kann ein Haushalts-Gargerät sein.

Das abfühlbare oder detektierbare mindestens eine Schaltungsbauteil befindet sich also in einem Sichtfeld des IR-Detektors.

Der IR-Detektor kann genau ein Schaltungsbauteil oder mehrere Schaltungsbauteile abfühlen. Dazu können sich entsprechend genau ein Schaltungsbauteil oder mehrere Schaltungsbauteile im Sichtfeld oder Detektorbereich des IR-Detektors befinden. Das Haushaltsgerät kann einen oder mehrere IR-Detektoren aufweisen.

Es ist eine Weiterbildung, dass mindestens ein IR-Detektor ein örtlich nicht-auflösender IR-Detektor ist. Ein solcher IR-Detektor ist besonders preiswert und robust und lässt sich zudem besonders einfach auswerten.

Es ist auch eine Weiterbildung, dass der IR-Detektor ein örtlich auflösender IR-Detektor ist. Dies ergibt den Vorteil, dass zusätzliche Information gewinnbar ist und zudem mehrere sich im Blickfeld des IR-Detektors befindliche Wärmequellen, z.B. umfassend mehrere Schaltungsbauteile, unterscheidbar sind.

Der IR-Detektor kann ein oder mehrere IR-Sensoren aufweisen. Der IR-Detektor kann z.B. ein oder mehrere Thermosäulen oder Thermoketten als IR-Sensoren aufweisen. Der IR-Detektor kann aber auch ein IR-empfindlicher Halbleiterchip sein, z.B. ein CCD-Sensor. Zusätzlich zu dem mindestens einen IR-Sensor kann der IR-Detektor eine dem mindestens einen IR-Sensor vorgeschaltete Optik aufweisen. Die Optik kann z.B. mindestens eine Linse, mindestens eine Blende usw. aufweisen.

Für den Fall, dass mehrere Schaltungsbauteile durch einen oder mehrere IR-Detektoren abgefühlt werden, ist eine exakte Unterscheidung der jeweiligen Bauteiltemperaturen durch zugeordnete Sensoren möglich. Es entsteht z.B. im Gegensatz zu einer Temperaturmessung mit einem Thermoelement kein Messfehler durch Überlagerung der Temperaturen der verschiedenen Schaltungsbauteile. Insbesondere können so auch unsymmetrische thermische Belastungen der Schaltungsbauteile und insbesondere auch dadurch kleinste Fehler in einem jeweiligen Bauteil erkannt werden.

Es ist eine für den Fall, dass ein bildweise oder bildpunktweise detektierender IR-Detektor dazu eingerichtet und angeordnet ist, die Temperatur mehrerer Schaltungsbauteile abzufühlen bzw. sich mehrere Schaltungsbauteile im Sichtfeld oder Detektorbereich des IR-Detektors befinden, vorteilhafte Weiterbildung, dass in einem von dem IR-Detektor aufgenommenen Bild lokale Temperaturbereiche jeweiligen Schaltungsbauteilen zuordenbar sind.

Unter einem Schaltungsbauteil kann ein Bauteil einer Schaltung oder eines Schaltungsnetzwerks verstanden werden. Das Schaltungsbauteil kann ein elektrisches oder elektronisches Bauteil sein. Das Schaltungsbauteil kann z.B. ein ohmscher Widerstand, ein Kondensator, eine Spule oder ähnliches sein. Das Schaltungsbauteil kann auch ein Halbleiterbauteil sein. Das Schaltungsbauteil kann ein integrierter Schaltkreis sein oder einen integrierten Schaltkreis aufweisen.

Es ist eine Weiterbildung, dass die Steuereinrichtung dazu eingerichtet ist, mindestens ein temperaturabfühlbares Schaltungsbauteil beruhend auf von dem Temperaturdetektor gemessenen Temperaturmessdaten anzusteuern.

Dass die Steuereinrichtung dazu eingerichtet ist, mindestens ein abfühlbares Schaltungsbauteil beruhend auf von dem Temperaturdetektor gemessenen Temperaturmessdaten anzusteuern, kann in einer Ausgestaltung umfassen, dass beruhend auf einem Eintritt eines durch die Temperaturmessdaten bestimmbaren Ereignisses durch das Haushaltsgerät mindestens eine Aktion ausgelöst wird bzw. auslösbar ist. Der Eintritt des Ereignisses kann ein Betrieb in einem kritischen Temperaturbereich oder ein voraussichtliches Eintreten in den kritischen Temperaturbereich umfassen. Die Aktion kann ein Ausgeben einer Warnung an einen Nutzer und/oder ein Auslösen mindestens einer Gegenmaßnahme zur Temperaturerniedrigung sein.

Das Einrichten der Steuereinrichtung kann deren Programmierung umfassen.

Es ist eine Ausgestaltung, dass mindestens ein durch den IR-Detektor abfühlbares Schaltungsbauteil ein Hochfrequenz (HF)-Schaltungsbauteil ist. Hierbei ist der IR-Detektor besonders vorteilhaft einsetzbar, da HF-Bauteile durch Anwesenheit von metallischen Objekten in ihrer Nähe besonders stark beeinflusst werden. In dieser Ausgestaltung müssen berührende Thermoelemente wie Platin-Messwiderstände o.ä. beabstandet zu dem abzufühlenden HF-Schaltungsbauteil angeordnet werden, um es nicht zu stören, z.B. an einem Kühlkörper des Schaltungsbauteils. Folglich ist aufgrund der thermischen Trägheit bzw. des Wärmewiderstands des Gesamtsystems mit Thermoelementen keine genaue und verzögerungsfreie Temperaturmessung eines HF-Schaltungsbauteils und somit auch kein ausreichend schnelles Reagieren auf eine thermische Überlastung des HF-Schaltungsbauteils möglich.

Es ist eine Weiterbildung, dass mindestens ein HF-Bauteil ein HF-Transistor ist. Es ist noch eine Weiterbildung, dass mindestens ein Schaltungsbauteil ein Teil bzw. eine Komponente einer Verstärkerschaltung ist.

Es ist außerdem eine Weiterbildung, dass mindestens ein Schaltungsbauteil ein Teil bzw. eine Komponente eines Durchführungsnetzwerks ist. Das Durchführungsnetzwerk kann dem HF-Transistor nachgeschaltet sein. Das Durchführungsnetzwerk kann zusammen mit dem HF-Transistor einen Teil der Verstärkerschaltung darstellen oder der Verstärkerschaltung entsprechen. Das Durchführungsnetzwerk kann unter anderem einen Zirkulator zum Schutz des HF-Transistors, eine Einheit zur Erfassung der reflektierten Mikrowellen-Leistung (z.B. einen Richtkoppler) und/oder eine Endlast zur Abführung von aus einem Garraum zurückreflektierter Mikrowellen-Leistung aufweisen.

Es ist noch eine Ausgestaltung, dass das Haushaltsgerät ein Mikrowellengerät ist und das mindestens eine HF-Bauteil ein Mikrowellenbauteil ist. Zum Erzeugen der Mikrowellen kann das Mikrowellengerät ein Magnetron aufweisen.

Das Mikrowellengerät kann ein Mikrowellen-Gargerät sein. Das Mikrowellen-Gargerät kann einen Garraum aufweisen, in den Mikrowellen einspeisbar sind, um darin befindliches Gargut zu erwärmen. Das Mikrowellen-Gargerät kann ein eigenständiges Mikrowellen-Gargerät sein. Das Mikrowellen-Gargerät kann alternativ ein Ofen, z.B. ein Backofen, mit Mikrowellenfunktionalität sein.

Das Mikrowellengerät kann aber auch ein Sterilisator für Gargeschirr usw. sein.

Es ist weiterhin eine Ausgestaltung, dass der IR-Detektor mindestens einen IR-Sensor aufweist, der auf das abzufühlende mindestens eine Schaltungsbauteil ausgerichtet ist. Dies ermöglicht vorteilhafterweise einen besonders einfachen und kompakten Aufbau sowie eine besonders verzerrungsfreie Betrachtung des Sichtfelds.

Es ist ferner eine Ausgestaltung, dass der IR-Detektor von dem abzufühlenden mindestens einen Schaltungsbauteil beabstandet ist. Dadurch wird eine Beeinflussung dieses Schaltungsbauteils besonders gering gehalten. Auch kann so eine flexiblere Positionierung des IR-Detektors erreicht werden. Dass der IR-Detektor von dem abzufühlenden mindestens einen Schaltungsbauteil beabstandet ist, umfasst insbesondere, dass sich eine Lücke oder ein Spalt, insbesondere Luftspalt, dazwischen befindet. Diese Lücke stellt insbesondere für HF-Schaltungsbauteile eine besonders effektive HF-Isolierung zwischen dem abzufühlenden mindestens einen Schaltungsbauteil und dem IR-Detektor bereit.

Es ist eine Weiterbildung, dass das mindestens eine temperaturabfühlbare Schaltungsbauteil in einem abschirmenden Gehäuse untergebracht ist und der IR-Detektor außerhalb dieses Gehäuses angeordnet ist. Dies ist besonders vorteilhaft für HF-Schaltungen oder HF-Schaltungsbauteile, da so auch elektrische Leitungen des IR-Detektors (z.B. eine Daten- und/oder Stromversorgungsleitung) vollständig außerhalb des Gehäuses angeordnet sind und folglich keine Störungen der Messung und/oder einer Datenübertragung durch hochfrequente Felder auftreten. Auch können so Leitungsdurchführungen durch das Gehäuse vermieden werden. Zudem kann die Anwesenheit der elektrischen Leitungen innerhalb des Gehäuses vermieden werden, welche ebenfalls HF-Schaltungsbauteile stören könnten.

Es ist auch eine Ausgestaltung, dass der IR-Detektor mindestens einen IR-Sensor und mindestens einen IR-Lichtwellenleiter aufweist und von dem abzufühlenden mindestens einen Schaltungsbauteil abgestrahltes IR-Licht durch den IR-Lichtwellenleiter auf den mindestens einen IR-Sensor fällt. Dies ergibt den Vorteil, dass der IR-Detektor besonders variabel positionierbar ist. Der IR-Lichtwellenleiter kann insbesondere ein oder mehrere Glasfaserkabel aufweisen.

Es ist außerdem eine Ausgestaltung, dass der IR-Lichtwellenleiter mindestens ein durch den IR-Detektor abzufühlendes Schaltungsbauteil berührt. So lässt sich eine besonders genaue Temperaturmessung erreichen. Da der IR-Lichtwellenleiter nichtmetallisch ist, sondern z.B. aus Kunststoff oder Glas besteht, stört er auch nicht das Schaltungsbauteil, insbesondere HF-Schaltungsbauteil.

Es ist zudem eine Ausgestaltung, die mindestens eine Aktion eine Verringerung einer in mindestens ein abfühlbares Schaltungsbauteil eingebrachten Leistung umfasst. Dadurch kann die Temperatur dieses Schaltungsbauteils verringert werden. Es ist eine Weiterbildung, dass die Steuereinrichtung alternativ oder zusätzlich dazu eingerichtet ist, mindestens ein anderes Schaltungsbauteil dergestalt anzusteuern, dass die in das mindestens eine abfühlbare Schaltungsbauteil eingebrachte Leistung verringert wird bzw. verringerbar ist. Das Verringern der Leistung kann ein Verringern einer elektrischen Leistung und/oder einer Mikrowellen-Leistung sein. Das Verringern der Leistung kann umfassen, dass das abfühlbare Schaltungsbauteil nur noch mit Teilleistung betrieben oder sogar ganz deaktiviert wird. Das Verringern der Leistung ist also eine mögliche Gegenmaßnahme zum Verringern der Temperatur des abfühlbaren Schaltungsbauteils.

Es ist eine alternative oder zusätzliche Ausgestaltung, dass das abfühlbare Schaltungsbauteil ein HF-Schaltungsbauteil ist und mindestens eine Aktion eine Änderung mindestens eines HF-Parameters umfasst. Die Steuereinrichtung ist also dazu eingerichtet, mindestens einen HF-Parameter beruhend auf von dem Temperaturdetektor gemessenen Temperaturmessdaten eines HF-Schaltungsbauteils zu ändern. Insbesondere bei Mikrowellengeräten kann so die Leistung der zurückreflektierten Mikrowellen verringert werden, wodurch sich die Temperatur in einem HF-Schaltungsbauteil - z. B. einem HF-Transistor - verringern lässt. Ein HF-Parameter kann z.B. eine Amplitude, eine Frequenz und/oder einen Phasenversatz von in einen Garraum eingestrahlten Mikrowellen umfassen. Das Ändern von HF-Parametern kann einem Ändern eines Arbeitspunkts entsprechen. Das Ändern der HF-Parameter ist also eine andere mögliche Gegenmaßnahme zum Verringern der Temperatur des abfühlbaren Schaltungsbauteils.

Es ist noch eine Ausgestaltung, dass der Eintritt des durch die Temperaturmessdaten bestimmbaren Ereignisses eine Erkennung eines temperaturkritischen Betriebs mindestens eines Schaltungsbauteils umfasst. Die Steuereinrichtung ist also insbesondere dazu eingerichtet, eine Ansteuerung mindestens eines abfühlbaren Schaltungsbauteils beruhend auf einer Erkennung eines (temperatur-)kritischen Betriebs mindestens eines Schaltungsbauteils zu ändern. So lässt sich eine Überhitzung und dadurch ggf. Beschädigung des Schaltungsbauteils verhindern.

Es ist noch eine Ausgestaltung, dass der temperaturkritische Betrieb ein Erreichen oder Überschreiten eines vorgegebenen Schwellwerts durch einen zeitlichen Temperaturgradient umfasst. Die Steuereinrichtung ist also insbesondere dazu eingerichtet, einen temperaturkritischen Betrieb dadurch festzustellen, dass ein zeitlicher Temperaturgradient einen vorgegebenen Schwellwert erreicht oder überschreitet. Mit Hilfe des berechneten Temperaturgradienten kann vorteilhafterweise näherungsweise auf eine reflektierte Leistung, insbesondere aus einem Garraum zurückreflektierte Mikrowellen-Leistung, geschlossen werden. Steigt der Temperaturgradient übermäßig schnell an, kann die Ansteuerung des Haushaltsgeräts so geändert werden, dass die zurückreflektierte Leistung bereits dann verringert wird, bevor eine kritische Temperatur an dem überwachten Schaltungsbauteil erreicht wird. Zudem kann der zeitliche Temperaturgradient dazu verwendet werden, eine Bauteilalterung, eine Bauteildrift und/oder unzulässige Abweichungen von bekannten Betriebszuständen zu erkennen oder zu diagnostizieren.

Es ist noch eine Ausgestaltung, dass der temperaturkritische Betrieb ein Erreichen oder Überschreiten eines vorgegebenen Schwellwerts durch eine Temperatur umfasst. Die Steuereinrichtung ist also dazu eingerichtet, einen temperaturkritischen Betrieb dadurch festzustellen, dass eine Temperatur mindestens einen vorgegebenen Schwellwert erreicht oder überschreitet. So kann oder können mittels des IR-Detektors eine Übertemperatur, eine Vorwarntemperatur und/oder eine kritische Grenztemperatur usw. an diesem Schaltungsbauteil festgestellt werden.

Es ist eine Weiterbildung, dass der temperaturkritische Betrieb anhand eines Temperaturverlaufs erkannt wird.

Die Steuereinrichtung kann also so programmiert sein, dass sie beruhend auf einem Momentanwert der Temperatur, einem Verlauf der Temperatur und/oder einem zeitlichen Temperaturgradienten erkennt, ob sich das temperaturabgefühlte Bauteil in einem normalen Betrieb (ohne übermäßig starke / schnelle Erwärmung) oder in einem kritischen Betrieb (bei übermäßig starker / schneller Erwärmung) befindet.

Es ist noch eine Ausgestaltung, dass das Haushaltsgerät ein Mikrowellen-Gargerät ist, das einen Halbleiterverstärker mit einem HF-Transistor und mit einem dem HF-Transistor nachgeschalteten Durchführungsnetzwerk aufweist, dass der Temperaturdetektor zum Abfühlen einer Temperatur mindestens des HF-Transistors angeordnet und eingerichtet ist und dass die Steuereinrichtung dazu eingerichtet ist, beruhend auf einem Eintritt eines durch die Temperaturmessdaten bestimmbaren Ereignisses mindestens eine Aktion auszulösen, die zu einer Verringerung einer Temperatur an dem HF-Transistor führt bzw. die eine Gegenmaßnahme zur Temperaturerniedrigung an dem HF-Transistor auslöst. Der Eintritt des Ereignisses kann - wie bereits oben beschrieben - z.B. einen Betrieb des HF-Transistors in einem kritischen Temperaturbereich oder ein voraussichtliches Eintreten des HF-Transistors in den kritischen Temperaturbereich umfassen. Diese Ausgestaltung weist den Vorteil auf, dass so besonders schnell und zuverlässig auf eine kritische oder kritisch werdende Temperaturerhöhung des HF-Transistors reagiert werden kann.

Insbesondere ermöglicht es die Überwachung des HF-Transistors mittels eines IR-Detektors, auf einen bisher zum Schutz des HF-Transistors vorgesehenen Zirkulator zu verzichten. Zusätzlich oder alternativ kann auf die Endlast verzichtet werden. Zusätzlich oder alternativ kann auf eine Messeinrichtung zur Messung der reflektierten Mikrowellenstrahlung verzichtet werden. Ggf. kann ganz auf das Durchführungsnetzwerk verzichtet werden. Alle diese Weiterbildungen ergeben eine hohe Kostenersparnis durch Wegfall von Bauteilen gegenüber nur geringen Mehrkosten durch das Vorsehen des IR-Detektors. Zudem können so Verluste durch das Durchführungsnetzwerk verringert werden, was zu einem höheren Wirkungsgrad führt. In anderen Worten kann das Mikrowellen-Gargerät Zirkulator-frei und/oder Endlast-frei und/oder frei von einer Messeinrichtung zur Messung der reflektierten Mikrowellenstrahlung oder auch ganz frei von einem Durchführungsnetzwerk ausgebildet sein.

Die Aufgabe wird auch gelöst durch ein Verfahren zum Betreiben eines Haushaltsgeräts, aufweisend mindestens ein Schaltungsbauteil, eine Steuereinrichtung zum Ansteuern des mindestens einen Schaltungsbauteils und mindestens einen Temperaturdetektor zum Abfühlen einer Temperatur mindestens eines Schaltungsbauteils, wobei die Steuereinrichtung mit dem mindestens einen Temperaturdetektor gekoppelt ist und wobei bei dem Verfahren eine Temperatur mindestens eines Schaltungsbauteils mittels mindestens eines IR-Detektors als dem mindestens einen Temperaturdetektor abgefühlt wird und die Steuereinrichtung das Haushaltsgerät beruhend auf der abgefühlten Temperatur ansteuert. Das Verfahren kann analog zu dem Haushaltsgerät ausgebildet werden und weist die gleichen Vorteile auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht einen Ausschnitt aus einer Skizze eines erfindungsgemäßen Mikrowellen-Gargeräts gemäß einem ersten Ausführungsbeispiel und;
- Fig.2: zeigt als Schnittdarstellung in Seitenansicht einen Ausschnitt aus einer Skizze eines erfindungsgemäßen Mikrowellen-Gargeräts gemäß einem zweiten Ausführungsbeispiel.

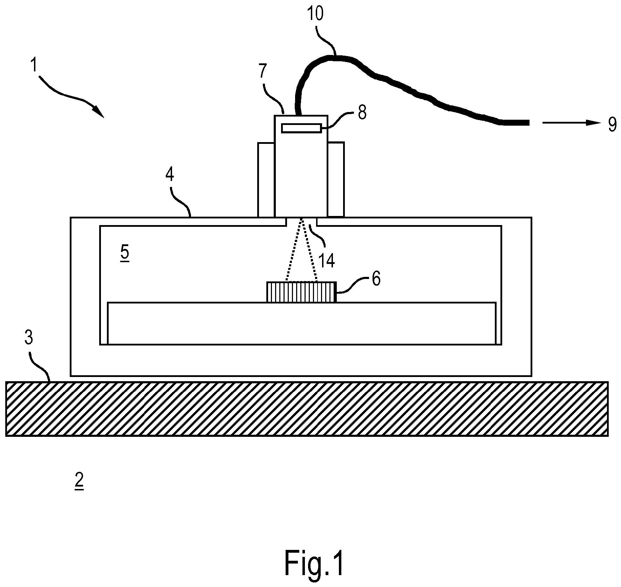

**Fig.1** zeigt ausschnittsweise ein Haushaltsgerät in Form eines Mikrowellen-Gargeräts 1. Das Mikrowellen-Gargerät 1 weist einen Garraum 2 auf, der von einer Garraumwandung 3 umschlossen ist. Außerhalb der Garraumwandung 3 - hier: oberhalb einer Decke der Garraumwandung 3 - ist ein Gehäuse 4 angeordnet, das einen HF-Bereich 5 abschirmend umschließt. In dem HF-Bereich 5 ist ein Schaltungsbauteil in Form eines HF-Transistors 6 untergebracht, der einen Teil einer Verstärkerschaltung zur Einbringung von Mikrowellen in den Garraum 2 umfasst.

An einer Außenseite des Gehäuses 4 ist ein IR-Detektor 7 angeordnet. Der IR-Detektor 7 ist durch ein Fenster 14 in dem Gehäuse 4 direkt auf den HF-Transistor 6 gerichtet und kann die Temperatur des HF-Transistors 6 abfühlen oder messen. Der IR-Detektor 7 ist also von dem HF-Transistor 6 beabstandet. Der IR-Detektor 7 kann mindestens einen IR-Sensor 8 aufweisen.

Der IR-Detektor 7 ist mit einer Steuereinrichtung 9 gekoppelt, mittels der die Verstärkerschaltung, ggf. auch direkt der HF-Transistor 6, ansteuerbar ist. Die Kopplung kann über ein Datenkabel 10 erfolgen. Über das Datenkabel 10 werden z.B. Temperaturmessdaten von dem IR-Detektor 7 an die Steuereinrichtung 9 übertragen. Die Steuereinrichtung 9 ist dazu eingerichtet, das Mikrowellen-Gargerät 1 beruhend auf von dem IR-Detektor 7 gemessenen Temperaturmessdaten anzusteuern. Speziell ist die Steuereinrichtung 9 dazu eingerichtet, beruhend auf einem Eintritt eines durch die Temperaturmessdaten bestimmbaren Ereignisses mindestens eine Aktion auszulösen.

Die mindestens eine Aktion kann eine Verringerung einer in den HF-Transistor 6 eingebrachten Leistung umfassen. Unter der Leistung kann insbesondere die aus dem Garraum 2 rückreflektierte Mikrowellen-Leistung verstanden werden. Die mindestens eine Aktion kann alternativ oder zusätzlich eine Änderung mindestens eines Mikrowellen-Parameters (wie einer Amplitude, einer Frequenz und/oder eines Phasenversatzes der in den Garraum 2 eingestrahlten Mikrowellen) umfassen, welche die rückreflektierte Leistung beeinflussen.

Das eintretende Ereignis kann eine Erkennung eines temperaturkritischen Betriebs mindestens eines Schaltungsbauteils umfassten. Der temperaturkritische Betrieb kann z.B. ein Erreichen oder Überschreiten eines vorgegebenen Schwellwerts durch einen zeitlichen Temperaturgradient und/oder ein Erreichen oder Überschreiten eines vorgegebenen Schwellwerts durch eine (Momentan-)Temperatur umfassen.

Die Steuereinrichtung 9 ist insbesondere dazu eingerichtet, beruhend auf einem Eintritt eines durch die von dem HF-Transistor 6 abgefühlten Temperaturmessdaten bestimmbaren Ereignisses mindestens eine Aktion auszulösen, die zu einer Verringerung der Temperatur an dem HF-Transistor 6 führt. So kann das Mikrowellen-Gargerät 1 schnell auf eine drohende oder eintretende Überhitzung des HF-Transistors 6 reagieren und entsprechende Gegenmaßnahmen treffen. Dadurch kann die Verstärkerschaltung des Mikrowellen-Gargeräts 1 ggf. auf einen Zirkulator, eine Endlast, eine Messeinrichtung zur Messung der reflektierten Mikrowellenstrahlung oder sogar ganz auf ein Durchführungsnetzwerk verzichten.

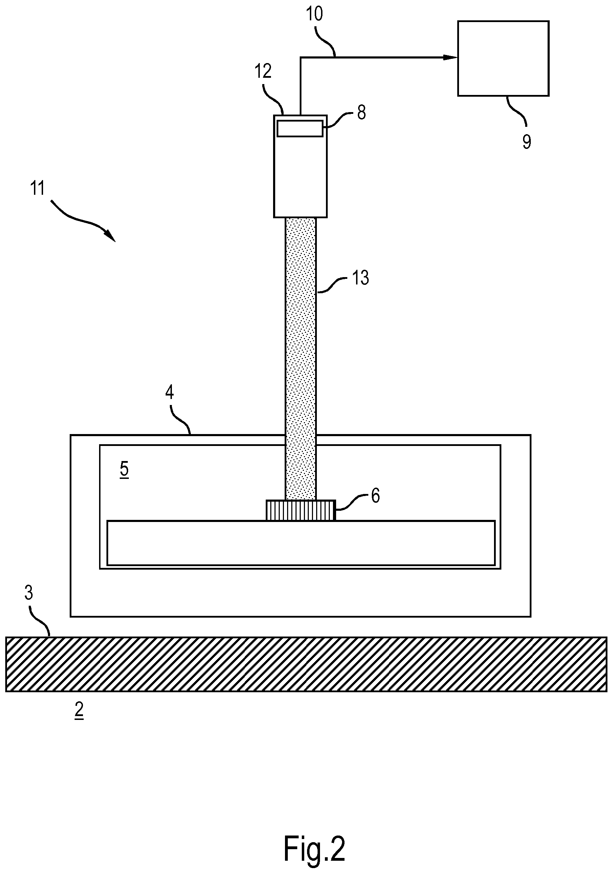

Fig.2 zeigt als Schnittdarstellung in Seitenansicht einen Ausschnitt aus einer Skizze eines erfindungsgemäßen Mikrowellen-Gargeräts 11 gemäß einem zweiten Ausführungsbeispiel. Das Mikrowellen-Gargerät 11 ist ähnlich zu dem Mikrowellen-Gargerät 1 ausgebildet, wobei jedoch nun ein IR-Detektor 12 mindestens einen IR-Sensor 8 und mindestens einen IR-Lichtwellenleiter 13 aufweist. Der IR-Lichtwellenleiter 13 ragt durch das Fenster 14 in den HF-Bereich 5.

Die IR-Licht einkoppelnde Stirnfläche des IR-Lichtwellenleiters 13 berührt den HF-Transistor 6 (oder weist zumindest einen nur sehr kleinen Spalt dazu auf). Daher wird von dem HF-Transistor 6 abgestrahltes IR-Licht durch den IR-Lichtwellenleiter 13 zu dem mindestens einen IR-Sensor 8 geleitet. Dieses Ausführungsbeispiel weist den Vorteil einer nur sehr geringen Messstörung durch andere Wärmequellen auf.

Obwohl der IR-Lichtwellenleiter 13 hier geradlinig eingezeichnet ist, kann er grundsätzlich auch gebogen verlaufen. Der IR-Sensor 8 braucht dann nicht auf den HF-Transistor 6 ausgerichtet zu sein, kann es aber. Dies ermöglicht eine besonders vielgestaltige Positionierung des IR-Sensors 8.

Selbstverständlich ist die vorliegende Erfindung nicht auf das gezeigte Ausführungsbeispiel beschränkt. Die Erfindung wird durch die beigefügten Ansprüche definiert.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Mikrowellen-Gargerät
- 2: Garraum
- 3: Garraumwandung
- 4: Gehäuse
- 5: HF-Bereich
- 6: HF-Transistor
- 7: IR-Detektor
- 8: IR-Sensor
- 9: Steuereinrichtung
- 10: Datenkabel
- 11: Mikrowellen-Gargerät
- 12: IR-Detektor
- 13: IR-Lichtwellenleiter
- 14: Fenster

## Patentansprüche

1. Haushalts-Mikrowellengargerät (1; 11),
- aufweisend einen Halbleiterverstärker mit einem HF-Transistor (6), eine Steuereinrichtung (9) zum Ansteuern des HF-Transistors (6) und mindestens einen Temperaturdetektor (7; 12), der mit der Steuereinrichtung (9) gekoppelt ist,
- wobei der mindestens eine Temperaturdetektor (7; 12) zum Abfühlen einer Temperatur des HF-Transistors (6) angeordnet und eingerichtet ist und
- die Steuereinrichtung (9) dazu eingerichtet ist, das Haushalts-Mikrowellengargerät (1; 11) beruhend auf einem Eintritt eines durch von dem Temperaturdetektor (7; 12) gemessenen Temperaturmessdaten bestimmbaren Ereignisses zum Auslösen mindestens einer Aktion anzusteuern,
- welche mindestens eine Aktion ein Auslösen mindestens einer Gegenmaßnahme zur Verringerung einer Temperatur an dem HF-Transistor (6) umfasst,
**dadurch gekennzeichnet, dass**
- der mindestens eine Temperaturdetektor ein IR-Detektor (7; 12) ist,
- die mindestens eine Gegenmaßnahme eine Änderung mindestens eines HF-Parameters umfasst.

2. Haushalts-Mikrowellengargerät (1; 11) nach Anspruch 1, **dadurch gekennzeichnet, dass** der IR-Detektor (7; 12) mindestens einen IR-Sensor (8) aufweist, der auf den HF-Transistor (6) ausgerichtet ist.

3. Haushalts-Mikrowellengargerät (1) nach Anspruch 2, **dadurch gekennzeichnet, dass** der IR-Detektor (7) von dem HF-Transistor (6) beabstandet ist.

4. Haushalts-Mikrowellengargerät (11) nach einem der vorhergehenden Ansprüche, **dadurch gekennzeichnet, dass** der IR-Detektor (12) mindestens einen IR-Sensor (8) und mindestens einen IR-Lichtwellenleiter (13) aufweist und von dem HF-Transistor (6) abgestrahltes IR-Licht durch den IR-Lichtwellenleiter (13) auf den mindestens einen IR-Sensor (8) fällt.

5. Haushalts-Mikrowellengargerät (11) nach Anspruch 2, **dadurch gekennzeichnet, dass** der IR-Detektor (12) mindestens einen IR-Sensor (8) und mindestens einen IR-Lichtwellenleiter (13) aufweist und von dem HF-Transistor (6) abgestrahltes IR-Licht durch den IR-Lichtwellenleiter (13) auf den mindestens einen IR-Sensor (8) fällt und der IR-Lichtwellenleiter (13) den HF-Transistor (6) berührt.

6. Haushalts-Mikrowellengargerät (1; 11) nach einem der vorhergehenden Ansprüche, **dadurch gekennzeichnet, dass** die mindestens eine Aktion eine Verringerung einer in den HF-Transistor (6) eingebrachten Leistung umfasst.

7. Haushalts-Mikrowellengargerät (1; 11) nach einem der vorhergehenden Ansprüche, **dadurch gekennzeichnet, dass** der Eintritt des durch die Temperaturmessdaten bestimmbaren Ereignisses eine Erkennung eines temperaturkritischen Betriebs des HF-Transistors (6) umfasst.

8. Haushalts-Mikrowellengargerät (1; 11) nach Anspruch 7, **dadurch gekennzeichnet, dass** der temperaturkritische Betrieb ein Erreichen oder Überschreiten eines vorgegebenen Schwellwerts durch einen zeitlichen Temperaturgradient umfasst.

9. Haushalts-Mikrowellengargerät (1; 11) nach einem der Ansprüche 7 oder 8,
**dadurch gekennzeichnet, dass** der temperaturkritische Betrieb ein Erreichen oder Überschreiten eines vorgegebenen Schwellwerts durch eine Temperatur umfasst.

10. Haushalts-Mikrowellengargerät (1; 11) nach einem der vorhergehenden Ansprüche, **dadurch gekennzeichnet, dass** es Zirkulator-frei ausgebildet ist.

11. Haushalts-Mikrowellengargerät (1; 11) nach einem der vorhergehenden Ansprüche, **dadurch gekennzeichnet, dass** das Haushalts-Mikrowellengargerät (1; 11) Endlast-frei ausgebildet ist.

12. Haushalts-Mikrowellengargerät (1; 11) nach einem der vorhergehenden Ansprüche, **dadurch gekennzeichnet, dass** das Haushalts-Mikrowellengargerät (1; 11) frei von einer Messeinrichtung zur Messung der reflektierten Mikrowellenstrahlung ausgebildet ist.

13. Haushalts-Mikrowellengargerät (1; 11) nach einem der vorhergehenden Ansprüche, **dadurch gekennzeichnet, dass** das Haushalts-Mikrowellengargerät (1; 11) frei von einem Durchführungsnetzwerk zur Messung der reflektierten Mikrowellenstrahlung ausgebildet ist.

14. Verfahren zum Betreiben eines Haushalts-Mikrowellengargeräts (1; 11) nach einem der vorhergehenden Ansprüche, bei dem
- eine Temperatur des HF-Transistors (6) mittels des IR-Detektors (7; 12) abgefühlt wird und
- die Steuereinrichtung (9) das Haushalts-Mikrowellengargerät (1; 11) beruhend auf der abgefühlten Temperatur ansteuert.

## Claims

1. Household microwave appliance (1; 11),
- having a solid-state amplifier with a HF transistor (6), a control facility (9) for actuating the HF transistor (6) and at least one temperature detector (7; 12), which is coupled to the control facility (9),
- wherein the at least one temperature detector (7; 12) is arranged and configured for sensing a temperature of the HF transistor (6), and
- the control facility (9) is configured to actuate the household microwave appliance (1; 11) on the basis of an occurrence of an event which can be determined by temperature measurement data measured by the temperature detector (7; 12), to trigger at least one action,
- said at least one action comprising a triggering of at least one countermeasure for lowering a temperature at the HF transistor (6),
**characterised in that**
- the at least one temperature detector is an IR detector (7; 12),
- the at least one countermeasure comprises changing at least one HF parameter.

2. Household microwave appliance (1; 11) according to claim 1, **characterised in that** the IR detector (7; 12) has at least one IR sensor (8), which is oriented towards the HF transistor (6).

3. Household microwave appliance (1) according to claim 2, **characterised in that** the IR detector (7) is spaced apart from the HF transistor (6).

4. Household microwave appliance (11) according to one of the preceding claims, **characterised in that** the IR detector (12) has at least one IR sensor (8) and at least one IR light waveguide (13) and IR light emitted by the HF transistor (6) passes through the IR light waveguide (13) and falls on the at least one IR sensor (8).

5. Household microwave appliance (11) according to claim 2, **characterised in that** the IR detector (12) has at least one IR sensor (8) and at least one IR light waveguide (13) and IR light emitted by the HF transistor (6) passes through the IR light waveguide (13) and falls on the at least one IR sensor (8) and the IR light waveguide (13) touches the HF transistor (6) .

6. Household microwave appliance (1; 11) according to one of the preceding claims, **characterised in that** the at least one action comprises a reduction of a power fed to the HF transistor (6).

7. Household microwave appliance (1; 11) according to one of the preceding claims, **characterised in that** the occurrence of the event which can be determined by the temperature measurement data comprises an identification of a temperature-critical operation of the HF transistor (6).

8. Household microwave appliance (1; 11) according to claim 7, **characterised in that** the temperature-critical operation comprises a predefined threshold value being reached or exceeded by a temporal temperature gradient.

9. Household microwave appliance (1; 11) according to one of claims 7 or 8, **characterised in that** the temperature-critical operation comprises a predefined threshold value being reached or exceeded by a temperature.

10. Household microwave appliance (1; 11) according to one of the preceding claims, **characterised in that** it is embodied without a circulator.

11. Household microwave appliance (1; 11) according to one of the preceding claims, **characterised in that** the household microwave appliance (1; 11) is embodied without an end load.

12. Household microwave appliance (1; 11) according to one of the preceding claims, **characterised in that** the household microwave appliance (1; 11) is embodied without a measuring facility for measuring the reflected microwave radiation.

13. Household microwave appliance (1; 11) according to one of the preceding claims, **characterised in that** the household microwave appliance (1; 11) is embodied without a feedthrough network for measuring the reflected microwave radiation.

14. Method for operating a household microwave appliance (1; 11) according to one of the preceding claims, in which
- a temperature of the HF transistor (6) is sensed by means of the IR detector (7; 12) and
- the control facility (9) actuates the household microwave appliance (1; 11) on the basis of the sensed temperature.

## Revendications

1. Appareil de cuisson à micro-ondes ménager (1 ; 11),
- présentant un amplificateur à semi-conducteur avec un transistor HF (6), un dispositif de commande (9) pour la commande du transistor HF (6) et au moins un détecteur de température (7 ; 12) qui est couplé au dispositif de commande (9),
- dans lequel l'au moins un détecteur de température (7 ; 12) est disposé et aménagé pour la détection d'une température du transistor HF (6) et
- le dispositif de commande (9) est aménagé pour commander l'appareil de cuisson à micro-ondes ménager (1 ; 11) sur la base de la survenue d'un événement déterminable par des données de mesure de température mesurées par le détecteur de température (7 ; 12), pour le déclenchement d'au moins une action,
- laquelle au moins une action comprend un déclenchement d'au moins une contre-mesure pour réduire une température au niveau du transistor HF (6), **caractérisé en ce que**
- l'au moins un détecteur de température est un détecteur IR (7 ; 12)
- l'au moins une contre-mesure comprend une modification d'au moins un paramètre HF.

2. Appareil de cuisson à micro-ondes ménager (1 ; 11) selon la revendication 1, **caractérisé en ce que** le détecteur IR (7 ; 12) comprend au moins un capteur IR (8) qui est aligné avec le transistor HF (6).

3. Appareil de cuisson à micro-ondes ménager (1) selon la revendication 2, **caractérisé en ce que** le détecteur IR (7) est espacé du transistor HF (6).

4. Appareil de cuisson à micro-ondes ménager (11) selon l'une des revendications précédentes, **caractérisé en ce que** le détecteur IR (12) comprend au moins un capteur IR (8) et au moins une fibre optique IR (13) et la lumière IR émise par le transistor HF (6) tombe, à travers la fibre optique IR (13), sur l'au moins un capteur IR (8).

5. Appareil de cuisson à micro-ondes ménager (11) selon la revendication 2, **caractérisé en ce que** le détecteur IR (12) comprend au moins un capteur IR (8) et au moins une fibre optique IR (13) et la lumière IR émise par le transistor HF (6) tombe, à travers la fibre optique IR (13), sur l'au moins un capteur IR (8) et la fibre optique IR (13) touche le transistor HF (6).

6. Appareil de cuisson à micro-ondes ménager (1 ; 11) selon l'une des revendications précédentes, **caractérisé en ce que** l'au moins une action comprend une réduction d'une puissance introduite dans le transistor HF (6).

7. Appareil de cuisson à micro-ondes ménager (1 ; 11) selon l'une des revendications précédentes, **caractérisé en ce que** la survenue de l'événement déterminable par les données de mesure de température comprend une détection d'un fonctionnement critique en termes de température du transistor HF (6).

8. Appareil de cuisson à micro-ondes ménager (1 ; 11) selon la revendication 7, **caractérisé en ce que** le fonctionnement critique en termes de température comprend une atteinte ou un dépassement d'une valeur limite prédéterminée par un gradient de température dans le temps.

9. Appareil de cuisson à micro-ondes ménager (1 ; 11) selon l'une des revendications 7 ou 8, **caractérisé en ce que** le fonctionnement critique en termes de température comprend une atteinte ou un dépassement d'une valeur limite prédéterminée par une température.

10. Appareil de cuisson à micro-ondes ménager (1 ; 11) selon l'une des revendications précédentes, **caractérisé en ce qu'**il est formé sans circulateur.

11. Appareil de cuisson à micro-ondes ménager (1 ; 11) selon l'une des revendications précédentes, **caractérisé en ce que** l'appareil de cuisson à micro-ondes ménager (1 ; 11) est formé sans charge finale.

12. Appareil de cuisson à micro-ondes ménager (1 ; 11) selon l'une des revendications précédentes, **caractérisé en ce que** l'appareil de cuisson à micro-ondes ménager (1 ; 11) est exempt d'un dispositif de mesure pour la mesure du rayonnement micro-ondes réfléchi.

13. Appareil de cuisson à micro-ondes ménager (1 ; 11) selon l'une des revendications précédentes, **caractérisé en ce que** l'appareil de cuisson à micro-ondes ménager (1 ; 11) est exempt d'un réseau d'exécution pour la mesure du rayonnement micro-ondes réfléchi.

14. Procédé d'exploitation d'un appareil de cuisson à micro-ondes ménager (1 ; 11) selon l'une des revendications précédentes, dans lequel
- une température du transistor HF (6) est détectée au moyen du détecteur IR (7 ; 12) et
- le dispositif de commande (9) commande l'appareil de cuisson à micro-ondes ménager (1 ; 11) sur la base de la température détectée.
